# EUROPEAN PATENT APPLICATION

(11) **EP 4 332 392 A1**
(43) Date of publication of application: **06.03.2024**
(21) Application number: 21939334.5
(22) Date of filing: 30.04.2021
(51) Int. Cl.: F16B 21/06, F16B 5/06

(54) **ENGAGEMENT STRUCTURE AND COUPLING MEMBER**

(71) Applicant: Japan Aerospace Exploration Agency, Chofu-shi, Tokyo 182-8522 (JP); Orbital Engineering Inc., Yokohama-shi, Kanagawa 221-0822 (JP); Toska-Bano'k Co., Ltd., Tokyo 101-0042 (JP)
(72) Inventor: UMEMURA, Yutaka, Chofu-shi, Tokyo 182-8522 (JP); MIYAKITA, Takeshi, Chofu-shi, Tokyo 182-8522 (JP); SAITOH, Masanori, Yokohama-shi, Kanagawa 221-0822 (JP); SAKAI, Shigenori, Tokyo 101-0042 (JP)
(74) Representative: Richly & Ritschel Patentanwälte PartG mbB
(86) International application number: PCT/JP2021/017211
(87) International publication number: WO 2022/230176

(57) **Abstract**

A fitting structure and a coupling member including the fitting structure are provided. The fitting structure includes: a first section (100) including a shaft portion (110) and a diameter-enlarged portion (120) provided at one end of the shaft portion (110); and a second section (200) enclosing the first section (100) from the outside in a radial direction of the shaft portion (110). A diameter of the diameter-enlarged portion (120) is larger than a diameter of the shaft portion (110). The shaft portion (110) includes a recess (113) recessed inward in the radial direction of the shaft portion (110). The second section (200) extends in the radial direction of the shaft portion (110) and is elastically deformable at least in the radial direction of the shaft portion (110). The second section (200) includes a protrusion (210a, 210b) corresponding to the recess (113). The protrusion (210a, 210b) engages with the recess (113).

## Description

### [Technical Field]

The present invention relates to a fitting structure and a coupling member including the fitting structure.

### [Background Art]

Since lightness is required of a propellant tank storing a cryogenic fluid for a national flagship launch system or the like, a foamed thermal insulator is used as a thermal insulator enclosing the propellant tank. However, there is a problem in that a foamed thermal insulator has low thermal insulation performance and cannot curb the evaporation rate of a cryogenic propellant such as liquid hydrogen. On the other hand, a cryogenic storage tank on the ground of which the evaporation rate has been curbed has a structure in which multilayer insulation (ML1) is provided in a double vacuum container.

In the MLI according to the related art, transmission of heat by radiation is weakened by superimposing a plurality of thermal-insulating films in layers and heat transmission by conduction is decreased by reducing a contact area between the thermal-insulating films using a nonwoven fabric or a mesh, whereby thermal insulation performance is secured. For example, in the technique described in Patent Document 1, a thick thermal-insulating film is employed to maintain structure in order to maintain intervals between the thermal-insulating films. In Patent Document 2, MLI in which heat conduction is decreased by providing a space instead of a nonwoven fabric or a mesh is disclosed.

### [Citation List]

### [Patent Document]

[Patent Document 1]
   US Patent Application Publication No. 2017/0073090
[Patent Document 2]
   US Patent No. 8234835

### [Summary of Invention]

### [Problem to be Solved by Invention]

However, in the MLI using a nonwoven fabric or a mesh disclosed in Patent Document 1, there is a problem in that thermal insulation performance is decreased due to contact between members. On the other hand, in the MLI using a spacer disclosed in Patent Document 2, since the spacers and the thermal-insulating films are fixed using an adhesive, thermal coupling is strengthened but thermal insulation performance is decreased and thus there is a problem such as generation of out-gas when used in a space environment.

Further, smooth fitting together of members, easy assembly, and strong coupling making decoupling difficult after being assembled are required for general coupling members.

The present invention was made in consideration of the aforementioned circumstances and an objective thereof is to provide a fitting structure that is light and allows easy fitting, and a coupling member including the fitting structure.

### [Means for Solving Problem]

(1) According to an aspect of the present invention, a fitting structure is provided, including: a first section including a shaft portion and a diameter-enlarged portion provided at one end of the shaft portion; and a second section enclosing the first section from the outside in a radial direction of the shaft portion, in which a diameter of the diameter-enlarged portion is larger than a diameter of the shaft portion, the shaft portion includes a recess recessed inward in the radial direction of the shaft portion, the second section extends in the radial direction of the shaft portion and is elastically deformable at least in the radial direction of the shaft portion, and the second section includes a protrusion corresponding to the recess, and the protrusion engages with the recess.
(2) In the fitting structure according to (1), the shaft portion may include a first curved portion, and the second section may include a second curved portion corresponding to the first curved portion and adjacent to the protrusion.
(3) In the fitting structure according to (1) or (2), a surface of the diameter-enlarged portion opposite a surface side connected to the shaft portion may be tilted outward in the radial direction of the shaft portion.
(4) In the fitting structure according to any one of (1) to (3), the first section and the second section may be held such that the second section does not rotate relative to the first section in a plane perpendicular to an axis of the shaft portion in a state in which the protrusion engages with the recess.
(5) According to another aspect of the present invention, a coupling member connected to another coupling member is provided, the coupling member including: a first section including a shaft portion provided at one end in a vertical direction of the coupling member and having an axis parallel to the vertical direction and a diameter-enlarged portion provided at one end of the shaft portion; and a second section provided at the other end in the vertical direction of the coupling member, in which a diameter of the diameter-enlarged portion is larger than a diameter of the shaft portion, the shaft portion includes a recess recessed inward in a radial direction of the shaft portion, the second section extends in the radial direction of the shaft portion and is elastically deformable at least in the radial direction of the shaft portion, the second section includes a protrusion corresponding to the recess, and the protrusion engages with the recess such that the coupling members are connectable.
(6) In the coupling member according to (5), the shaft portion may include a first curved portion, and the second section may include a second curved portion corresponding to the first curved portion and adjacent to the protrusion.
(7) In the coupling member according to (5) or (6), a surface of the diameter-enlarged portion opposite a surface side connected to the shaft portion may be tilted outward in the radial direction of the shaft portion.
(8) In the coupling member according to any one of (5) to (7), the first section and the second section may be held such that the second section does not rotate relative to the first section in a plane perpendicular to an axis of the shaft portion in a state in which the protrusion engages with the recess.

### [Effects of Invention]

According to the present invention, it is possible to provide a fitting structure that is light and allows easy fitting, and a coupling member including the fitting structure.

### [Brief Description of Drawings]

FIG. 1 is a perspective view of a coupling member according to an embodiment of the present invention when seen from a first base side of the coupling member.
FIG. 2 is a perspective view of the coupling member according to the embodiment of the present invention when seen from a second base side of the coupling member.
FIG. 3 is a schematic side view of the coupling member according to the embodiment of the present invention when seen in a direction (a Y-axis direction) perpendicular to a vertical direction of the coupling member.
FIG. 4 is a schematic top view of the coupling member according to the embodiment of the present invention when seen when seen from the first base side in a direction (a Z-axis direction) parallel to the vertical direction of the coupling member.
FIG. 5 is a sectional view of a shaft portion of the coupling member according to the embodiment of the present invention in a plane perpendicular to an axis of the shaft portion.
FIG. 6 is a sectional view of a shaft portion in a plane perpendicular to the axis of the shaft portion and illustrating a modified example of a recess of the coupling member according to the embodiment of the present invention.
FIG. 7 is a sectional view of a shaft portion in a plane perpendicular to the axis of the shaft portion and illustrating a modified example of the recess of the coupling member according to the embodiment of the present invention.
FIG. 8 is a sectional view of a shaft portion in a plane perpendicular to the axis of the shaft portion and illustrating a modified example of the recess of the coupling member according to the embodiment of the present invention.
FIG. 9 is a schematic bottom view of the coupling member according to the embodiment of the present invention when seen from a second base side in the direction (the Z-axis direction) parallel to the vertical direction of the coupling member.
FIG. 10 is a schematic bottom view when seen from the second base side in the direction (the Z-axis direction) parallel to the vertical direction of the coupling member according to the embodiment of the present invention and illustrating a modified example of a protrusion of the coupling member.
FIG. 11 is a schematic bottom view when seen from the second base side in the direction (the Z-axis direction) parallel to the vertical direction of the coupling member according to the embodiment of the present invention and illustrating a modified example of the protrusion of the coupling member.
FIG. 12 is a schematic bottom view when seen from the second base side in the direction (the Z-axis direction) parallel to the vertical direction of the coupling member according to the embodiment of the present invention and illustrating a modified example of the protrusion of the coupling member.
FIG. 13 is a schematic sectional view illustrating a state in which a first section of one coupling member and a second section of the other coupling member face each other and illustrating a connection state of the coupling members according to the embodiment of the present invention.
FIG. 14 is a schematic sectional view illustrating a state in which the first section of one coupling member is in contact with the second section of the other coupling member and illustrating a connection state of the coupling members according to the embodiment of the present invention.
FIG. 15 is a schematic sectional view illustrating a state in which the first section of one coupling member and the second section of the other coupling member are fitted to each other and illustrating a connection state of the coupling members according to the embodiment of the present invention.
FIG. 16 is a schematic sectional view of a thermal-insulating structure using the coupling member according to the embodiment of the present invention when the thermal-insulating structure is seen in a direction parallel to a thermal-insulating film constituting the thermal-insulating structure.

### [Description of Embodiments]

Hereinafter, exemplary embodiments of the present invention will be described in detail. The present invention is not limited to configurations disclosed in the embodiments and can be modified in various forms without departing from the gist of the present invention. In the following description, specific numerical values or materials are exemplified, but other numerical values or materials may be employed as long as advantageous effects of the present invention are obtained. Elements in the following embodiments can be combined. Numerical limiting ranges in the following embodiments include a lower limit and an upper limit thereof. A numerical range expressed by "greater than" or "less than" does not include the corresponding numerical value.

### [Coupling member]

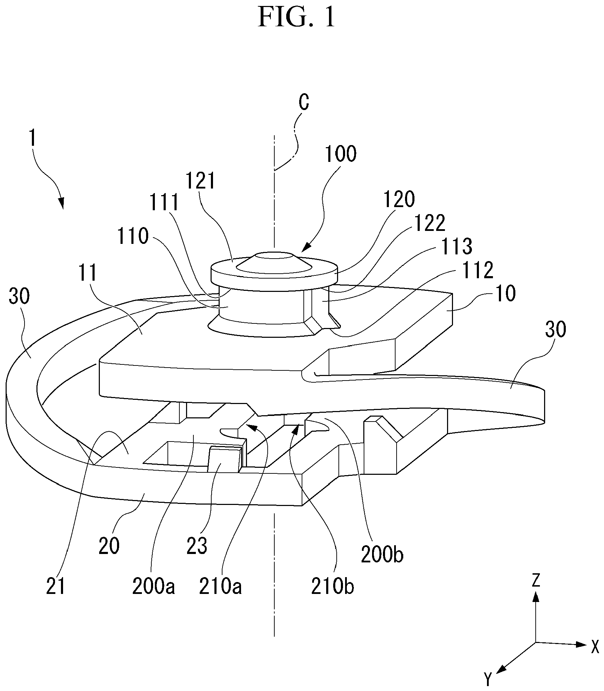

A fitting structure according to the present invention will be described below with a coupling member 1 illustrated in FIG. 1 as an example. The coupling member 1 illustrated in FIG. 1 includes a first base 10, a second base 20, and a third base 30. In a vertical direction of the coupling member 1, the first base 10 and the second base 20 are separated from each other, and the first base 10 and the second base 20 are connected by the third base 30. In the following description, the vertical direction of the coupling member 1 is defined as a direction parallel to a Z axis, a positive direction of the Z axis is defined as an upward direction, and a negative direction of the Z axis is defined as a downward direction. The Z axis is perpendicular to an X axis and a Y axis, and the X axis and the Y axis are perpendicular to each other.

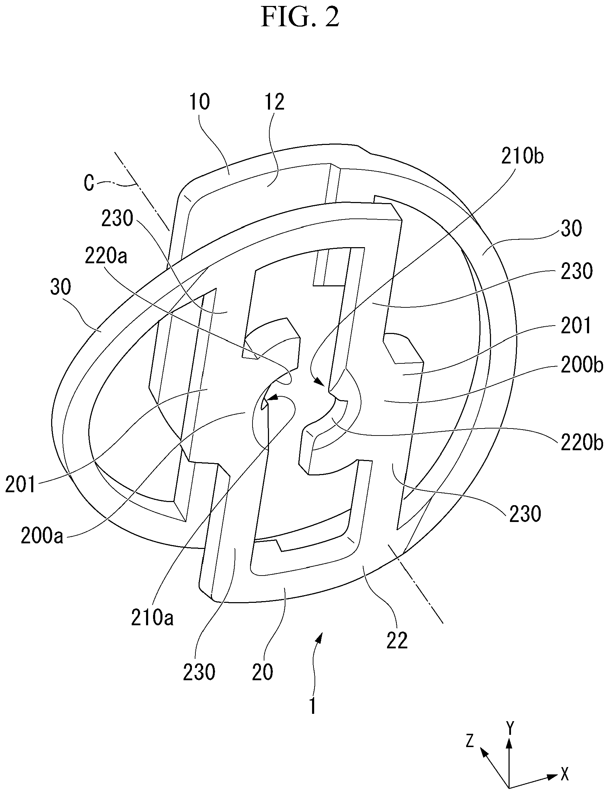

As illustrated in FIG. 1, the coupling member 1 includes a first section 100 including a shaft portion 110 and a diameter-enlarged portion 120 provided at one end (an end 111) in the vertical direction of the shaft portion 110 on the first base 10 side. A perspective view of the coupling member 1 when seen from the second base 20 side of the coupling member 1 is illustrated in FIG. 2. As illustrated in FIG. 2, the coupling member 1 includes a second section 200 extending in a radial direction of the shaft portion 110 on the second base 20 side. That is, the first section 100 is provided on the first base 10 side which is one end in the vertical direction of the coupling member 1, and the second section 200 is provided on the second base 20 side which is the other end in the vertical direction of the coupling member 1. The first base 10 includes a first top surface 11 and a first bottom surface 12 in the vertical direction of the coupling member 1. The second base 20 includes a second top surface 21 and a second bottom surface 22 in the vertical direction of the coupling member 1. A protrusion 23 is provided on the second top surface 21 of the second base 20.

### (First section)

The first section 100 includes a shaft portion 110 and a diameter-enlarged portion 120 provided at one end (an end 111) in the vertical direction of the shaft portion 110. The shaft portion 110 is connected to the diameter-enlarged portion 120 at the end 111 and is connected to the first top surface 11 of the first base 10 at the end 112 opposite the end 111. In the example illustrated in FIG. 1, the vertical direction of the coupling member 1 is parallel to an axis c of the shaft portion 110. The axis c of the shaft portion 110 is a line passing through the center of the shaft portion 110 and parallel to a direction in which the shaft portion 110 extends.

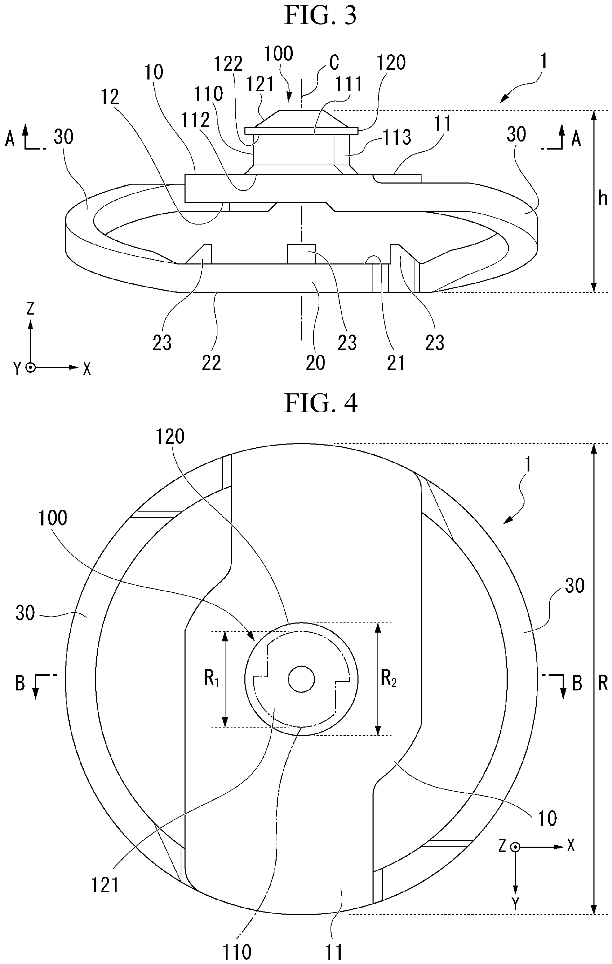

FIG. 3 is a schematic side view of the coupling member 1 illustrated in FIG. 1 when seen in a direction (the Y-axis direction) perpendicular to the vertical direction of the coupling member 1. FIG. 4 is a schematic top view of the coupling member 1 illustrated in FIG. 1 when seen from the first base 10 side in a direction (the Z-axis direction) parallel to the vertical direction of the coupling member 1.

As illustrated in FIG. 3, the diameter-enlarged portion 120 includes a surface 121 and a surface 122 and is connected to the end 111 of the shaft portion 110 on the surface 122 side. The height of the diameter-enlarged portion 120 along the axis c is not particularly limited and is preferably equal to or greater than 0.3 mm in view of curbing of damage or deformation at the time of fitting work or holding a fitted state well.

A diameter R2 of the diameter-enlarged portion 120 is larger than a diameter R1 of the shaft portion 110. The diameter R1 of the shaft portion 110 and the diameter R2 of the diameter-enlarged portion 120 are diameters of outer shapes of the corresponding portions in a sectional view with a plane perpendicular to the axis c of the shaft portion 110 as illustrated in FIG. 4. When a recess, a protrusion, or a cutout is formed in a part of the outer shape of the shaft portion 110 or the diameter-enlarged portion 120 in the sectional view, a virtual circle without such parts is supposed and the diameter thereof is defined as the diameter R1 of the shaft portion 110 or the diameter R2 of the diameter-enlarged portion 120. When the outer shape of the shaft portion 110 or the diameter-enlarged portion 120 in the sectional view is not a circle but a polygon, the length of the longest segment spanning across the outer shape of the polygon is defined as the diameter R1 or the diameter R2. The diameter R1 of the shaft portion 110 is not particularly limited and is preferably equal to or greater than 0.5 mm in consideration of a machining method or a strength when it has been reduced. The diameter R2 of the diameter-enlarged portion 120 is not particularly limited and is preferably greater by 0.4 mm or more than the diameter R1 in view of compensation for a function of engaging with the second section 200 not to be disengaged therefrom.

As illustrated in FIG. 3, it is preferable that the surface 121 of the diameter-enlarged portion 120 opposite the surface 122 in contact with the shaft portion 110 be tilted outward in the radial direction of the shaft portion 110. By employing this configuration, the second section 200 is guided by the surface 121 when the first section 100 and the second section 200 are fitted to each other, the second section 200 is appropriately elastically deformed, and thus the first section 100 and the second section 200 are easily fitted. Since the surface 121 is tilted outward in the radial direction of the shaft portion 110, the strength of the diameter-enlarged portion 120 can be secured.

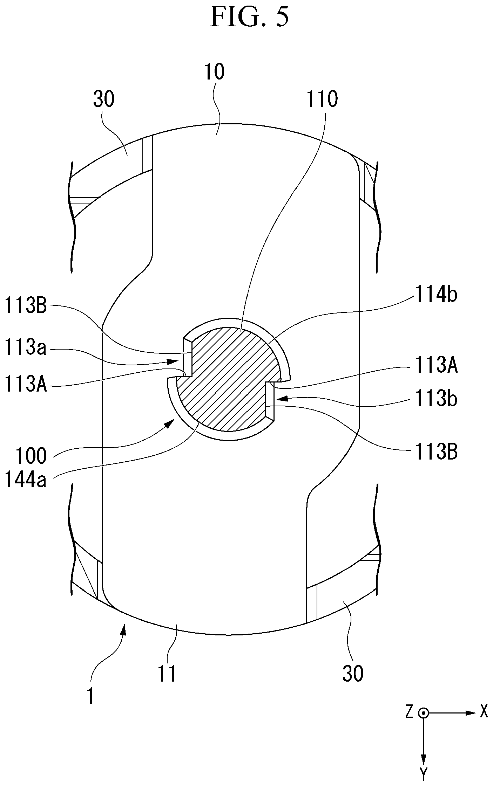

FIG. 5 is a sectional view of the shaft portion 110 in a plane perpendicular to the axis c. FIG. 5 is also a sectional view in a plane passing through line A-A in FIG. 3 (a plane parallel to the X axis and the Y axis). As illustrated in FIG. 5, the shaft portion 110 includes a recess 113 (113a, 113b) recessed inward in the radial direction of the shaft portion 110. The recess 113 has substantially the same shape in an arbitrary plane perpendicular to the axis c of the shaft portion 110. In other words, the recess 113 is a groove extending in a direction parallel to the axis c and having a predetermined width and a predetermined depth.

The shape of the recess 113 is not particularly limited and may include, for example, a surface 113A and a surface 113B as illustrated in FIG. 5. The surface 113A and the surface 113B are adjacent to each other and extend in a direction along the axis c. In order to reliably curb relative rotation of the first section 100 and the second section 200 in a circumferential direction of the shaft portion 110 (the circumferential direction of the axis c of the shaft portion 110), it is preferable that an angle formed by the surface 113A and the surface 113B in a plane perpendicular to the axis c be equal to or less than 90°. The surface 113A and the surface 113B may be connected via a plane or a curved surface. The recess 113 may include three or more planes or curved surfaces extending in the direction parallel to the axis c. The angle can be identified on CAD data at the time of design.

It is preferable that the surface of the shaft portion 110 other than the recess 113 be curved. As illustrated in FIG. 5, the outer shape of the shaft portion 110 other than the recess 113 may form an arc in a plane perpendicular to the axis c. In the example illustrated in FIG. 5, the outer shape of the shaft portion 110 includes two recesses 113 (113a, 113b) and two first curved portions 114 (114a, 114b) in a sectional view of the shaft portion 110.

When the length of a segment w (not illustrated) connecting ends of the recess 113 (boundaries between the recess 113 and the first curved portion 114) in a plane perpendicular to the axis c is defined as a width of the recess 113, the width w of the recess 113 is preferably equal to or greater than 0.3 mm. When the longest distance out of distances between the segment w and the outer shape of the recess 113 in the direction perpendicular to the segment w in the plane perpendicular to the axis c is defined as a depth d of the recess 113, the depth d of the recess 113 is preferably equal to or greater than 0.3 mm.

The recess 113 may be provided over the whole length of the shaft portion 110 or in a part of the shaft portion 110 in the direction parallel to the axis c of the shaft portion 110.

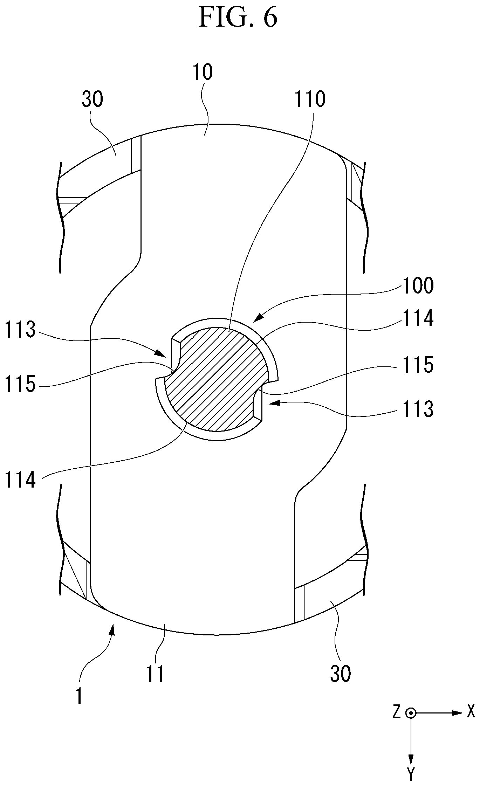

FIG. 6 illustrates a modified example of the recess 113. The recess 113 may have a sectional shape drawing a curved line in a plane perpendicular to the axis c as illustrated in FIG. 6. In this case, the recess 113 includes a curved surface 115 recessed inward in the radial direction of the shaft portion 110. When the recess 113 is formed of a curved surface, it is possible to curb relative rotation of the first section 100 and the second section 200 in the circumferential direction of the shaft portion 110 and to enable the relative rotation in that direction by applying a predetermined force.

Two recesses 113 may be provided, as illustrated in FIG. 5, but the number of recesses 113 may be one. When there are fewer recesses 113, there is an advantage in that the weight of the coupling member 1 is decreased.

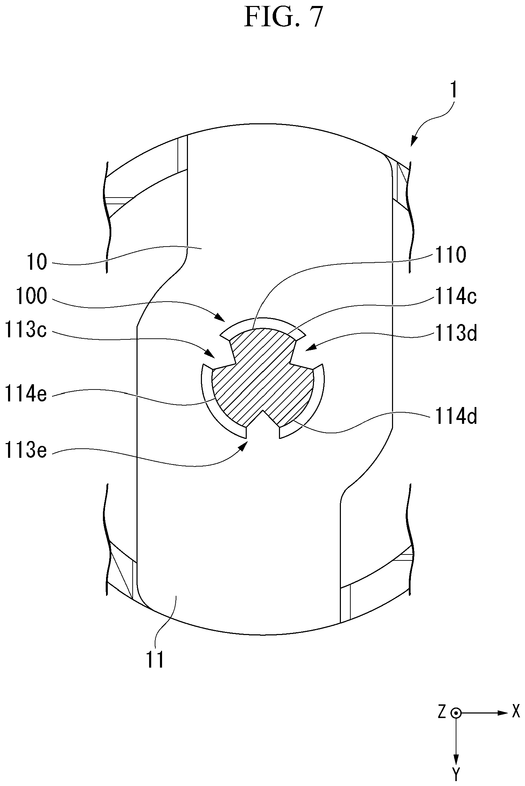

Three, four, five, or more recesses 113 may be provided. FIG. 7 illustrates an example in which three recesses 113 are provided. In the example illustrated in FIG. 7, the recesses 113 (113c, 113d, and 113e) are provided every 120° in the circumferential direction of the shaft portion 110, and first curved portions 114 (114c, 114d, and 114e) are provided between the recesses 113.

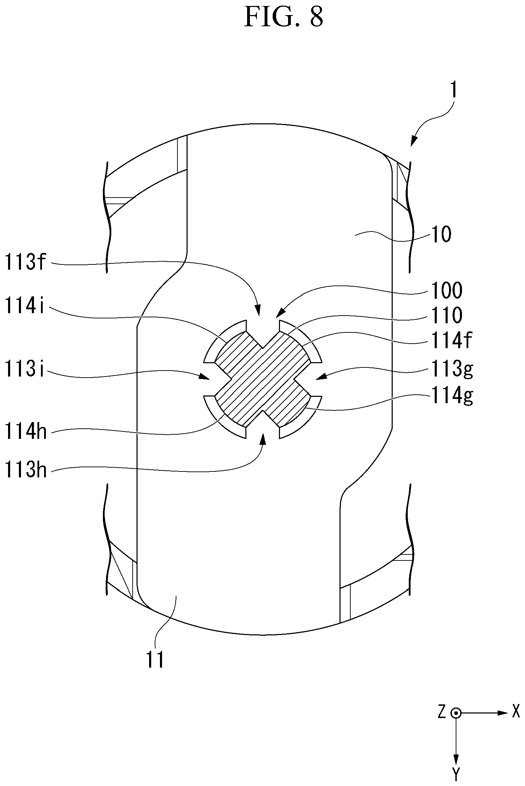

FIG. 8 illustrates an example in which four recesses 113 are provided. In the example illustrated in FIG. 8, the recesses 113 (113f, 113g, 113h, and 113i) are provided every 90° in the circumferential direction of the shaft portion 110, and first curved portions 114 (114f, 114g, 114h, and 114i) are provided between the recesses 113.

The height of the shaft portion 110 along the axis c is not particularly limited and is preferably equal to or greater than 0.3 mm in view of compensation for the function of engaging with the second section 200.

### (Second section)

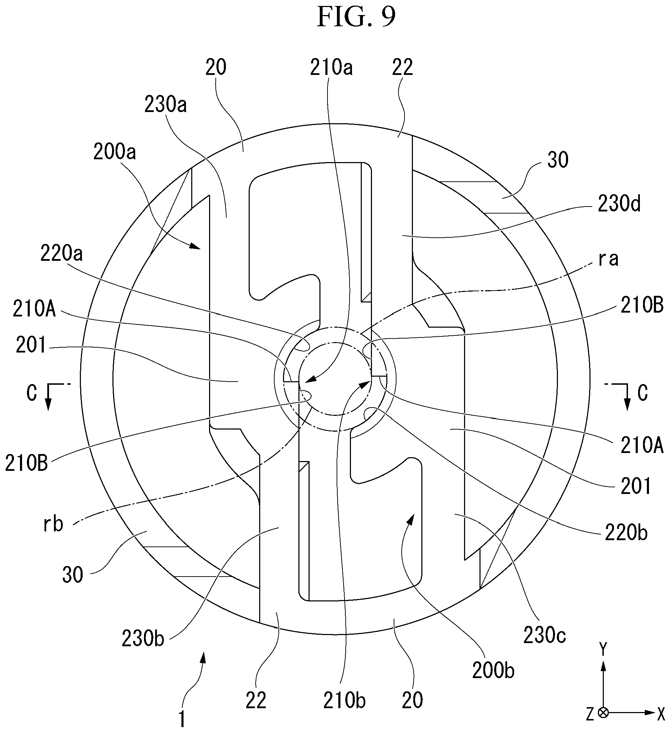

FIG. 9 is a schematic bottom view of the coupling member 1 when seen from the second base 20 side in the direction (the positive direction of the Z axis) parallel to the vertical direction of the coupling member 1. As illustrated in FIG. 9, the second section 200 is provided on the second base 20 side. In the example illustrated in FIG. 9, two second sections 200 (200a and 200b) are provided.

As illustrated in FIG. 9, the second section 200 extends in the radial direction of the shaft portion 110. The second section 200 includes a protrusion 210 (210a, 210b) corresponding to the recess 113. In view of reliably curbing the relative rotation of the first section 100 and the second section 200 in the circumferential direction of the shaft portion 110, the outer shape of the protrusion 210 in a plane perpendicular to the axis c of the shaft portion 110 preferably corresponds to the outer shape of the recess 113. For example, in the second section 200 illustrated in FIG. 9, the protrusion 210 includes a surface 210A and a surface 210B. The surface 210A and the surface 210B are adjacent to each other. It is preferable that an angle formed by the surface 210A and the surface 210B in the plane perpendicular to the axis c be equal to or less than 90°. The second section 200 includes a connection surface 201 on the second bottom surface 22 side of the second base 20. The connection surface 201 faces the first top surface 11 of the first base 10 when the coupling member 1 is connected to another coupling member.

On the other hand, the outer shape of the protrusion 210 in the plane perpendicular to the axis c of the shaft portion 110 does not have to be completely the same as the outer shape of the recess 113 and has only to correspond to the outer shape of the recess 113 in a range in which relative rotation of the first section 100 and the second section 200 in the circumferential direction of the shaft portion 110 can be curbed.

As illustrated in FIG. 9, the second section 200 may include a second curved portion 220 (220a, 220b) corresponding to the first curved portion 114 of the shaft portion 110 and adjacent to the protrusion 210. The second curved portion 220 is curved and extends in the direction in which the second section 200 extends. It is preferable that the second curved portion 220 have a surface shape corresponding to the first curved portion 114. When the first section 100 and the second section 200 are fitted to each other, the second curved portion 220 is guided by the diameter-enlarged portion 120, and thus work for aligning the relative positions of the first section 100 and the second section 200 is facilitated. Since the second curved portion 220 is provided, it is possible to further strengthen the connection between the coupling members 1 in the direction parallel to the axis c after the first section 100 and the second section 200 have been fitted to each other.

The shape of the second curved portion 220 in the plane perpendicular to the axis c of the shaft portion 110 may be an arc shape. In this case, it is preferable that a diameter R3 of a virtual circle ra including the arc as a part of the circumference thereof be the same as the diameter R1 of the shaft portion 110. Accordingly, it is possible to curb rattling when the coupling members 1 are connected to each other. It is preferable that the diameter R3 of the circle ra be less than the diameter R2 of the diameter-enlarged portion 120. Accordingly, it is possible to further strengthen the connection between the coupling members 1 in the direction parallel to the axis c after the first section 100 and the second section 200 have been fitted to each other.

In the example illustrated in FIG. 9, the second section 200a includes an arm 230 (230a, 230b), and the protrusion 210a and the second curved portion 220a are connected to the second base 20 by the arm 230. The second section 200b includes an arm 230 (230c, 230d), and the protrusion 210b and the second curved portion 220b are connected to the second base 20 by the arm 230. When a virtual circle rb inscribed in the protrusions 210a and 210b in the plane perpendicular to the axis c of the shaft portion 110 is supposed, a diameter R4 of the circle rb is less than the diameter R3 of the circle ra.

The second section 200 is elastically deformable at least in the radial direction of the shaft portion 110. When the first section 100 and the second section 200 are fitted to each other, the second section 200 (200a, 200b) is elastically deformed and thus the diameter R4 of the circle rb is enlarged. Through this operation, the diameter R4 of the circle rb becomes greater than the diameter R2 of the diameter-enlarged portion 120 and the first section 100 can be fitted to the second section 200. Accordingly, it is possible to soften a tactile feeling when the coupling members 1 are connected and to secure connection between the coupling members 1 after being fitted.

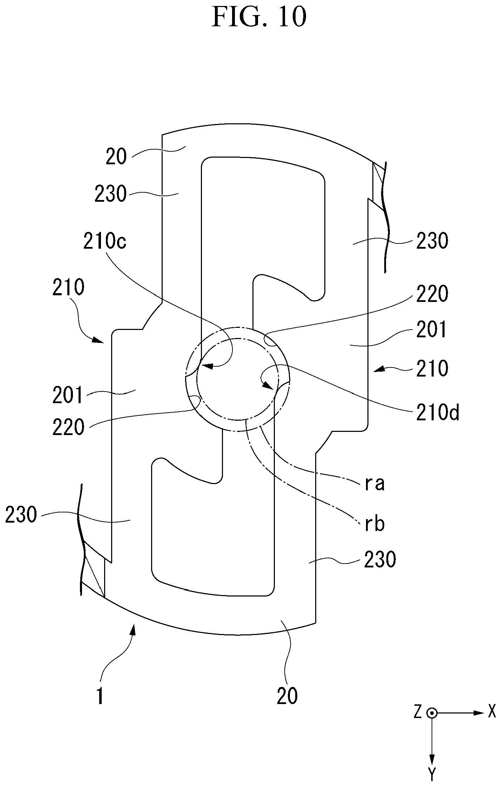

FIG. 10 is a diagram illustrating a modified example of the protrusion 210 and is a schematic bottom view when the coupling member 1 is seen from the second base 20 side in the direction (the positive direction of the Z axis) parallel to the vertical direction of the coupling member 1. The protrusion 210 illustrated in FIG. 10 has a sectional shape drawing a curve corresponding to the recess 113 illustrated in FIG. 6 in the plane perpendicular to the axis c.

Two protrusions 210 may be provided as illustrated in FIG. 9, but the number of protrusions 210 may be one. When the number of protrusions 210 is small, it is possible to decrease the sectional area of the transmission path of heat in the coupling member 1, for example, when the coupling member 1 is used for a thermal-insulating structure.

Three, four, five, or more second sections 200 may be provided in consideration of the strength or elasticity of the material of the coupling member 1. Accordingly, it is possible to enhance the connection stability between the coupling members 1.

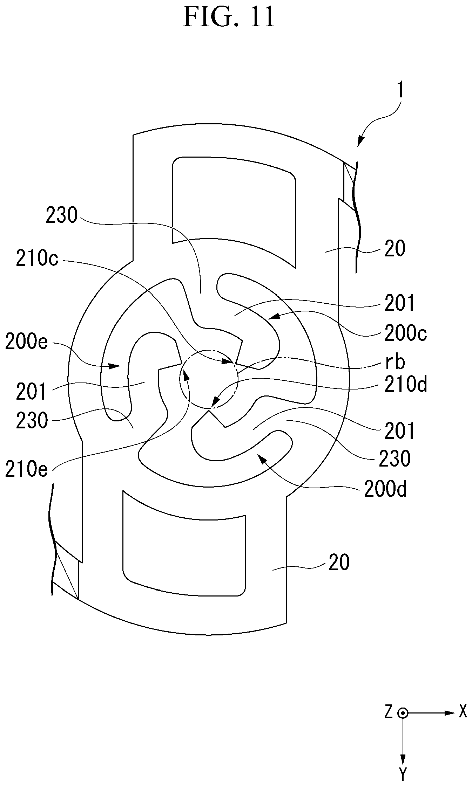

FIG. 11 illustrates an example in which three second sections 200 (200c, 200d, and 200e) are provided. In the example illustrated in FIG. 11, three protrusions 210 are provided, and the protrusions 210 (210c, 210d, and 210e) are provided every 120° in the circumferential direction of the virtual circle rb inscribed in the protrusions 210. The second section 200 illustrated in FIG. 11 corresponds to the first section 100 illustrated in FIG. 7 in which three recesses 113 (113c, 113d, and 113e) are provided.

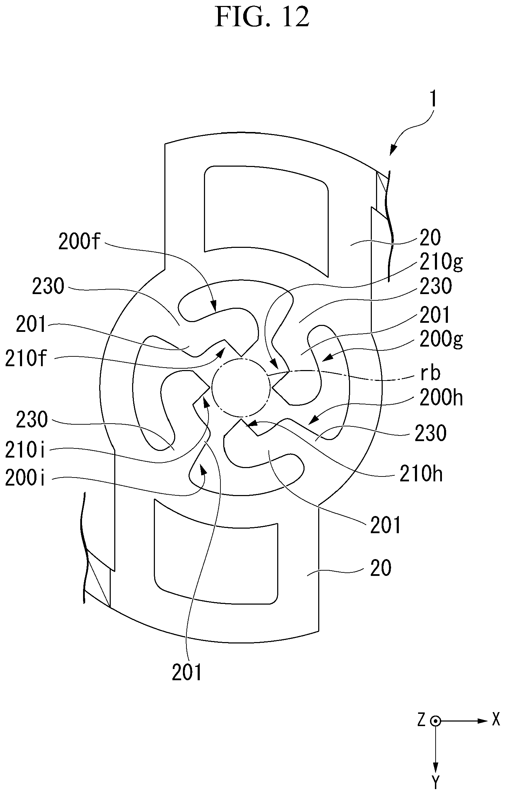

FIG. 12 illustrates an example in which four second sections 200 (200f, 200g, 200h, and 200i) are provided. In the example illustrated in FIG. 12, four protrusions 210 are provided, and the protrusions 210 (210f, 210g, 210h, and 210i) are provided every 90° in the circumferential direction of the virtual circle rb inscribed in the protrusions 210. The second section 200 illustrated in FIG. 12 corresponds to the first section 100 illustrated in FIG. 8 in which four recesses 113 (113f, 113g, 113h, and 113i) are provided.

Since one end in the length direction of the second section 200 illustrated in FIG. 11 or 12 is connected to the second base 20 and the other end at which the protrusion 210 is provided is a free end, the second section is elastically deformable at least in the radial direction of the shaft portion 110 when a pressing force is applied thereto. Accordingly, it is possible to smooth a tactile feeling when the coupling members 1 are connected and to secure connection between the coupling members 1 after being fitted.

It is preferable that the coupling member 1 according to this embodiment be formed of a resin material to be described later. When the coupling member 1 is formed of a resin material, it is possible to add appropriate elastic deformability to the second section 200, to connect the coupling members 1 without using a special tool, and to relaiably maintain a state in which the first section 100 and the second section 200 are fitted after the coupling members 1 have been connected.

The height of the second section 200 in the vertical direction of the coupling member 1 is not particularly limited and is preferably equal to or greater than 0.6 mm in view of compensation for the function of engaging with the second section 200. Since the second section 200 does not have a structure in the vertical direction of the coupling member 1 and thus can be formed thin, it is possible to decrease the weight of the coupling member 1. The height, the width, the depth, and the like of the aforementioned members are measured using a measuring tool such as a micrometer.

In the example illustrated in FIG. 1, one end of the third base 30 is connected to the first base 10, and the other end of the third base 30 is connected to the second base 20. In the coupling member 1, the length of the third base 30 may be larger than the distance between the first base 10 and the second base 20. In the example illustrated in FIG. 1, the third base 30 forms a pair and has a spiral shape. By employing this shape, the stability of the coupling member 1 can be secured, and the coupling member 1 can be smoothly elastically deformed in the vertical direction. The coupling member 1 may be elastically deformable in the vertical direction of the coupling member 1 by elastically deforming the third base 30.

In view of functioning as a structure for maintaining intervals between thermal-insulating films in MLI and compensation for a function of easy connection between the coupling member 1, the height h in the vertical direction of the coupling member 1 is preferably equal to or greater than 1.2 mm. The outer diameter R in a plane perpendicular to the vertical direction of the coupling member 1 is preferably equal to or greater than 5 mm to prevent buckling due to a load in the vertical direction when the coupling members 1 are connected in the vertical direction. The height of the coupling member is a distance in the vertical direction of the coupling member 1 from the first top surface 11 of the first base 10 to the second bottom surface 22 of the second base 20. The outer diameter of the coupling member 1 is set by an outer shape of the third base 30.

It is preferable that the coupling member 1 be formed of a resin material such as polyether ether ketone (PEEK), polycarbonate (PC), polyethylene terephthalate (PET), or polyimide (PI). For example, the coupling member 1 is manufactured through injection molding using such a resin material as a raw material. The coupling member 1 is not limited to these materials and may be formed of another appropriate arbitrary material. Polyether ether ketone is most preferable for the coupling member 1 in view of high thermal resistance, low-temperature brittle resistance, outgassing decrease in vacuum, and ultraviolet resistance, which are required for a thermal-insulating member for a space transportation vehicle.

The coupling member 1 according to the embodiment has a simple structure and is lightweight, and the connection between the coupling members 1 is strong.

### [Connection between coupling members]

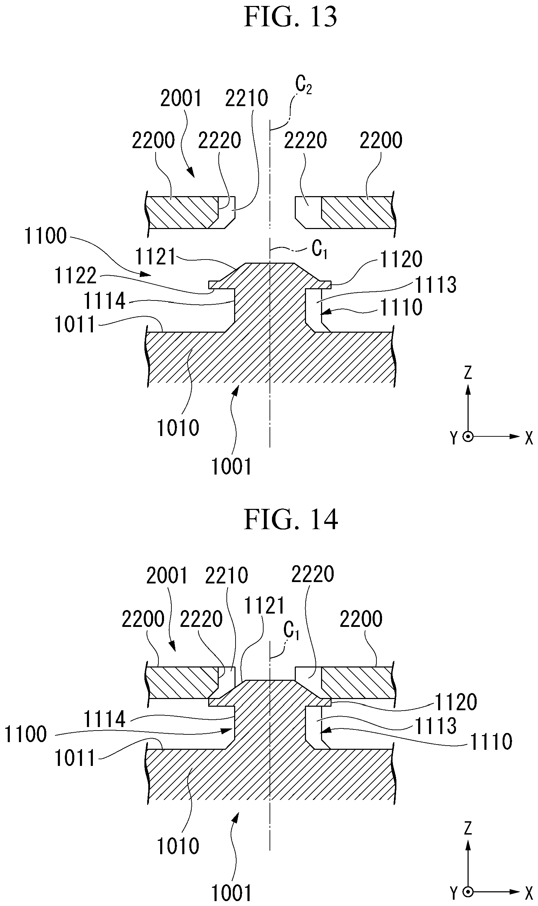

A mode for connecting the coupling members 1 will be described below. When two coupling members 1 are connected, the first section 100 of one coupling member 1 and the second section 200 of the other coupling member 1 are fitted to each other. FIGS. 13 to 15 are schematic sectional views of two coupling members when the coupling members are connected. FIGS. 13 to 15 illustrate sectional views of a coupling member 1001 and a coupling member 2001 in a plane passing through an axis c₁ of a shaft portion 1110 of the coupling member 1001 and an axis c₂ of a shaft portion (not illustrated) of the coupling member 2001, where the axes are matched. FIGS. 13 to 15 illustrate the vicinities of the axis c₁ and the axis c₂, and some parts of the coupling member 1001 and the coupling member 2001 are not illustrated. FIGS. 13 to 15 correspond to the sectional views in the plane (the plane parallel to the X axis and the Z axis) passing through line B-B in FIG. 4 and line C-C in FIG. 9.

When the coupling member 1001 and the coupling member 2001 are connected, the coupling member 1001 and the coupling member 2001 are first arranged in the vertical direction (the Z-axis direction) such that a first section 1100 of the coupling member 1001 and a second section 2200 of the coupling member 2001 face each other as illustrated in FIG. 13.

Subsequently, the coupling member 1001 and the coupling member 2001 are relatively moved in a direction in which the coupling member 1001 and the coupling member 2001 become closer to each other in the vertical direction, and a surface 1121 of a diameter-enlarged portion 1120 of the first section 1100 of the coupling member 1001 and the second section 2200 of the coupling member 2001 are brought into contact with each other as illustrated in FIG. 14.

Since the second section 2200 of the coupling member 2001 is elastically deformable, the second section 2200 of the coupling member 2001 is deformed to correspond to the shape of the diameter-enlarged portion 1120 of the coupling member 1001 by relatively moving the coupling member 1001 and the coupling member 2001 in the direction in which the coupling member 1001 and the coupling member 2001 become closer to each other. Specifically, the second section 2200 of the coupling member 2001 is deformed outward at least in the radial direction of the shaft portion 1110.

An actual operation shown in FIGS. 13 to 15 fits one coupling member to the other coupling member. At this time, since the second section 2200 of the coupling member 2001 is broadened in a direction in which it is separated away from the diameter-enlarged portion 1120 of the first section 1100 of the coupling member 1001 and is tilted along the tilted shape of the surface 1121 while being in contact with the circumference of the diameter-enlarged portion 1120, a press-fit force required for connection between the coupling members is reduced.

In the example illustrated in FIGS. 13 to 15, in a state in which the axis c1 of the coupling member 1001 and the axis c2 of the coupling member 2001 are matched, they are connected. However, since the second section 2200 of the coupling member 2001 is tilted along the tilted shape of the surface 1121 while being in contact with the diameter-enlarged portion 1120, it is possible to curb misalignment of a fitting protrusion from a fitting hole in an insertion axis direction even without a positional relationship in which the axes of the coupling members are matched and to easily connect two coupling members.

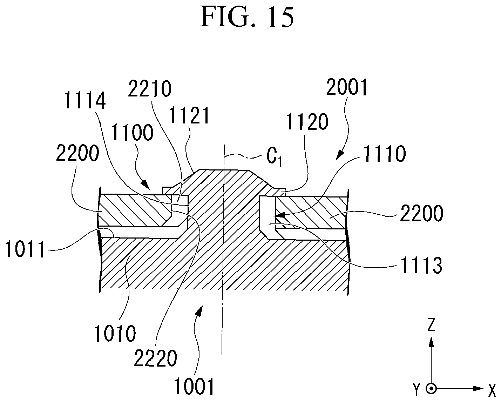

The state illustrated in FIG. 14 changes to the state illustrated in FIG. 15 by relatively further moving the coupling member 1001 and the coupling member 2001 in the direction in which the coupling member 1001 and the coupling member 2001 become closer to each other. In this state, the second section 2200 of the coupling member 2001 encloses the shaft portion 1110 of the coupling member 1001 from the outside in the radial direction of the shaft portion 1110 of the coupling member 1001. Apart of the surface 1122 of the diameter-enlarged portion 1120 of the coupling member 1001 and a part of the connection surface of the second section 2200 of the coupling member 2001 face each other. For example, this state is referred to as a semi-fitted state.

When a recess 1113 of the coupling member 1001 and a protrusion 2210 of the coupling member 2001 engage with each other in this semi-fitted state, this state can be referred to as a fitted state.

On the other hand, when the recess 1113 of the coupling member 1001 and the protrusion 2210 of the coupling member 2001 do not engage with each other in this semi-fitted state, the recess 1113 of the coupling member 1001 and the protrusion 2210 of the coupling member 2001 are made to engage with each other by relatively rotating the coupling member 1001 and the coupling member 2001 in the circumferential direction of the axis c₁ of the coupling member 1001 (the axis c₂ of the coupling member 2001).

In a state in which the first section 1100 of the coupling member 1001 and the second section 2200 of the coupling member 2001 are fitted to each other through this operation and the coupling member 1001 and the coupling member 2001 are connected, a relative position between the coupling member 1001 and the coupling member 2001 in the circumferential direction of the axis c₁ of the coupling member 1001 (the axis c₂ of the coupling member 2001) is fixed. In this state, relative rotation between the coupling member 1001 and the coupling member 2001 in the circumferential direction of the axis c₁ of the coupling member 1001 (the axis c₂ of the coupling member 2001) is curbed.

In general, when a rotation stop mechanism is provided in a fitting structure including a protrusion and a recess, rotation at the time of a fitting operation is curbed and thus an insertion operation for fitting cannot be performed without matching directions of mutual components. However, in a fitting operation employing the fitting structure according to the present invention, a first section (a protrusion) can be inserted into a second section (a recess) toward an arbitrary component, and the component can be rotated relatively after being inserted such that the protrusion of the second section engages with the recess provided in a shaft portion of the first section, whereby rotation stop acts.

Even when a force is applied to the connected coupling members 1, connection between the coupling members 1 is not easily released. For example, it is not easy to release the connection through a simple operation such as dragging the connected coupling members 1 in the vertical direction or inserting and twisting a thin tool such as a flat-head screwdriver into a gap between the two coupling members 1. However, by performing a releasing operation of separating the second section 200 from the shaft portion 110 of the first section 100 while broadening the second section 200 outward in the radial direction of the shaft portion 110 using an appropriate tool, the first section 100 or the second section 200 constituting the fitting structure or the coupling members 1 can be disassembled without being damaged and the coupling members 1 can be connected again.

An embodiment of the present invention is a thermal-insulating structure including a thermal-insulating film and a plurality of coupling members supporting the thermal-insulating film and is a thermal-insulating structure using the coupling members according to the embodiment as the coupling members. In this thermal-insulating structure, the surface of the thermal-insulating film crosses the vertical direction of the coupling members.

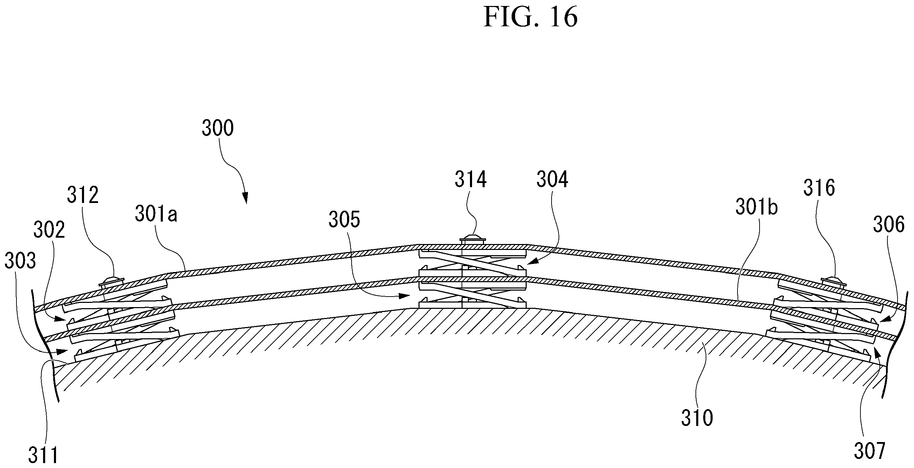

FIG. 16 is a schematic sectional view of a thermal-insulating structure 300 according to this embodiment when seen in a direction parallel to the surface of thermal-insulating films 301 (301a and 301b) constituting the thermal-insulating structure 300 according to the embodiment. As illustrated in FIG. 16, a coupling member 302 and a coupling member 303 are connected to each other, a coupling member 304 and a coupling member 305 are connected to each other, and a coupling member 306 and a coupling member 307 are connected to each other, such that the vertical direction thereof is parallel to a direction crossing the surfaces of the thermal-insulating films 301. In the example illustrated in FIG. 16, the thermal-insulating structure 300 is provided on a surface 311 of a substrate 310 with the coupling members 302 to 307 interposed therebetween.

The coupling members 302 to 307 are connected in a direction in which the thermal-insulating films 301 are stacked as illustrated in FIG. 16. One or more thermal-insulating films 301 may be interposed between two connected coupling members. Each thermal-insulating film 301 is a low-emissivity film that can curb transmission of heat by radiation. The thermal-insulating film 301 is not particularly limited and is manufactured, for example, by depositing metal such as aluminum, gold, germanium, or conductive indium tin oxide (ITO) on a resin film of polyimide, polyester, or the like. In the state illustrated in FIG. 16, first sections 312, 314, and 316 are exposed from the tops of the uppermost coupling members 302, 304, and 306.

In the aforementioned embodiment, the fitting structure according to the present invention has been described using a coupling member as an example, but the fitting structure according to the present invention is not limited to this example. For example, in the aforementioned embodiment, the first section and the second section of the fitting structure are provided in a single component, but the first section and the second section of the fitting structure may be provided in separate components. Even when the first section and the second section of the fitting structure are provided in a single component, for example, the first section and the second section may be present in the same plane. In the coupling member according to the aforementioned embodiment, the axis of the shaft portion of the first section and the connection surface of the second section are substantially perpendicular to each other, but the axis and the connection surface may have an angle therebetween or may have a parallel positional relationship in addition to perpendicular crossing. A plurality of first sections or a plurality of second sections may be provided in a single component.

When the coupling member according to the present invention is employed for a thermal-insulating structure, it is possible to reduce the weight of the thermal-insulating structure.

The fitting structure or the coupling member according to the present invention may be used as a fitting structure or a coupling member for fixing a security member such as a shoplifter/burglar-proof sensor or buzzer. The fitting structure or the coupling member according to the present invention may be used for a sealing ring for a returnable box, a cash carrying envelope, or the like, a sealing tool such as a sealing band, or assembly of an instrument or a toy of which disassembly or reformation is prevented without using an adhesive or a screw.

### [Industrial Applicability]

According to the present invention, it is possible to provide a fitting structure that is light and allows easy fitting, and a coupling member including the fitting structure, which has a very high industrial value.

### [Reference Signs List]

- 1: Coupling member
- 10: First base
- 20: Second base
- 30: Third base
- 100: First section
- 110: Shaft portion
- 113: Recess
- 120: Diameter-enlarged portion
- 200: Second section
- 210: Protrusion

## Claims

1. A fitting structure comprising:
a first section including a shaft portion and a diameter-enlarged portion provided at one end of the shaft portion; and
a second section enclosing the first section from the outside in a radial direction of the shaft portion,
wherein a diameter of the diameter-enlarged portion is larger than a diameter of the shaft portion,
wherein the shaft portion includes a recess recessed inward in the radial direction of the shaft portion,
wherein the second section extends in the radial direction of the shaft portion and is elastically deformable at least in the radial direction of the shaft portion, and
wherein the second section includes a protrusion corresponding to the recess, and the protrusion engages with the recess.

2. The fitting structure according to claim 1, wherein the shaft portion includes a first curved portion, and
wherein the second section includes a second curved portion corresponding to the first curved portion and adjacent to the protrusion.

3. The fitting structure according to claim 1 or 2, wherein a surface of the diameter-enlarged portion opposite a surface side connected to the shaft portion is tilted outward in the radial direction of the shaft portion.

4. The fitting structure according to any one of claims 1 to 3, wherein the first section and the second section are held such that the second section does not rotate relative to the first section in a plane perpendicular to an axis of the shaft portion in a state in which the protrusion engages with the recess.

5. A coupling member connected to another coupling member, the coupling member comprising:
a first section including a shaft portion provided at one end in a vertical direction of the coupling member and having an axis parallel to the vertical direction and a diameter-enlarged portion provided at one end of the shaft portion; and
a second section provided at the other end in the vertical direction of the coupling member,
wherein a diameter of the diameter-enlarged portion is larger than a diameter of the shaft portion,
wherein the shaft portion includes a recess recessed inward in a radial direction of the shaft portion,
wherein the second section extends in the radial direction of the shaft portion and is elastically deformable at least in the radial direction of the shaft portion, and
wherein the second section includes a protrusion corresponding to the recess, and the protrusion engages with the recess such that the coupling members are connectable.

6. The coupling member according to claim 5, wherein the shaft portion includes a first curved portion, and
wherein the second section includes a second curved portion corresponding to the first curved portion and adjacent to the protrusion.

7. The coupling member according to claim 5 or 6, wherein a surface of the diameter-enlarged portion opposite a surface side connected to the shaft portion is tilted outward in the radial direction of the shaft portion.

8. The coupling member according to any one of claims 5 to 7, wherein the first section and the second section are held such that the second section does not rotate relative to the first section in a plane perpendicular to an axis of the shaft portion in a state in which the protrusion engages with the recess.
